Europäisches Patentamt

European Patent Office

Office européen des brevets

(11) Veröffentlichungsnummer: **0 350 513 B1**

(12) **EUROPÄISCHE PATENTSCHRIFT**

(45) Veröffentlichungstag der Patentschrift: **26.02.92**

(51) Int. Cl.⁵: **A01B 79/00**

(21) Anmeldenummer: **88110994.6**

(22) Anmeldetag: **09.07.88**

(54) **Bodenbearbeitungsmaschine.**

(43) Veröffentlichungstag der Anmeldung:
**17.01.90 Patentblatt 90/03**

(45) Bekanntmachung des Hinweises auf die
Patenterteilung:
**26.02.92 Patentblatt 92/09**

(84) Benannte Vertragsstaaten:
**AT DE FR GB IT NL**

(56) Entgegenhaltungen:
EP-A- 0 094 442          AU-B- 572 495
DE-A- 2 219 971          DE-A- 2 534 596
DE-A- 2 538 601          DE-A- 2 638 417
DE-A- 2 713 979          US-A- 3 288 480

(73) Patentinhaber: **Rabewerk GmbH + Co.**

**W-4515 Bad Essen(DE)**

(72) Erfinder: **Warnking, Richard, Dipl.-Ing.**
**Glockenpatt 5**
**W-4515 Bad Essen 1(DE)**

(74) Vertreter: **Missling, Arne, Dipl.-Ing.**
**Patentanwalt Bismarckstrasse 43**
**W-6300 Giessen(DE)**

**Beschreibung**

Die Erfindung bezieht sich auf eine Bodenbearbeitungsmaschine größerer Arbeitsbreite, die zum Transport an einer Schmalseite und zur Bodenbearbeitung an ihrer Breitseite mit einem Schlepper verbindbar oder an diesen anbaubar ist, wobei die Bodenbearbeitungsmaschine oder ein Werkzeuge tragender Rahmen der Bodenbearbeitungsmaschine auf mehreren Rädern lagerbar ist und die Räder relativ zum Rahmen oder der Bodenbearbeitungsmaschine höhenverstellbar sind und wobei ferner zwei dieser Räder für den Transport der Bodenbearbeitungsmaschine in Längsrichtung verwendbar und zumindest eines der Räder um eine im wesentlichen vertikale Achse schwenkbar angeordnet ist.

In der US-Patentschrift 3,288,480 ist eine solche Bodenbearbeitungsmaschine beschrieben, bei der sowohl in der Mitte des Rahmens zwei Räder (ein treibendes sowie ein nachlaufendes Rad) sowie an beiden Enden des Rahmens je ein mit dem treibenden Rad etwa fluchtendes seitliches Rad vorgesehen sind. Während das nachlaufende Rad während der Bodenbearbeitung nach oben weggeschwenkt wird, dient es zusammen mit dem treibenden Rad und einem der seitlichen Räder, die insgesamt beim Transport um 90˚ verschwenkt werden, für die Fahrt über die Straße. Dabei wird dafür gesorgt, daß das dem Schlepper am nächsten befindliche, seitliche Rad vom Boden abgehoben ist und demzufolge in seiner Arbeitsstellung verbleiben kann. Eine solche Anordnung entspricht zweifellos den Bedürfnissen des Transports von Bodenbearbeitungsmaschinen. Obwohl dabei mitgeführte Folge-Arbeitsgeräte beim Transport auf der Straße gilt abgestützt wären, ist die vorbekannte Ausführung nur bedingt dafür geeignet, weil beispielsweise eine Sämaschine eine relativ große Tiefenerstreckung in Fahrtrichtung hat, so daß es schwierig ist, im mittleren Bereich des Rahmens die Räder so unterzubringen, daß sie beim Transport noch innerhalb der zulässigen Transportbreite sind. Aber auch bei der Anwendung an einer einzigen Bodenbearbeitungsmaschine ergäben sich Probleme, weil bei Kurvenfahrten in erheblichem Umfang die rollende Reibung der Räder auf dem Boden verlassen wird.

Eine weitere Bodenbearbeitungsmaschine ist aus der DE-A1-26 38 417 bekannt. Sowohl bei dieser als auch bei anderen bekannten Bodenbearbeitungsmaschinen größerer Arbeitsbreite ist es erforderlich, besondere Maßnahmen zu treffen, um die Bodenbearbeitungsmaschine auf einer Straße transportieren zu können. Da die Bodenbearbeitungsmaschine eine Breite aufweist, welche wesentlich größer ist, als die im Straßenverkehr maximal zugelassene Fahrzeugbreite, wird die Bodenbearbeitungsmaschine zum Transport an einer ihrer Schmalseiten mit einem Zugfahrzeug gekoppelt, so daß sie in Form eines die erforderliche Breite nicht überschreitenden, allerdings relativ langen Anhängers gezogen werden kann.

Da eine derartige Bodenbearbeitungsmaschine, bedingt durch die große Arbeitsbreite, ein hohes Gewicht aufweist, ist es nicht möglich, sie ohne zusätzliche Abstützungsmaßnahmen an einem Schlepper zu lagern. Es sind deshalb mehrere Räder vorgesehen, auf welchen sich die Bodenbearbeitungsmaschine bei der Fahrt über den Acker, insbesondere auf dem Vorgewende, zumindest zum Teil abstützt. Da die Bodenbearbeitungsmaschine auch zum Transport auf der Straße mit Rädern versehen sein muß, ist es aus dem Stand der Technik bekannt, die Räder so auszubilden, daß diese, durch geeignete Verstellung oder Verschwenkung, von einer Arbeits-Fahrtrichtung in eine Transport-Fahrtrichtung lageveränderbar sind. Dabei ist es erforderlich, daß der die Werkzeuge tragende Rahmen relativ zu den Rädern höhenverstellbar ist, um in der Arbeitsstellung die Bodenbearbeitungswerkzeuge mit dem Erdreich in Eingriff zu bringen.

Bei der aus der DE-A1-26 38 417 bekannten Bodenbearbeitungsmaschine, weisen die Schwenkachsen der Räder sowohl zueinander als auch bezüglich der Längsmittelebene des Rahmens einen relativ geringen Abstand auf, so daß ein seitliches Verkippen der Bodenbearbeitungsmaschine während des Betriebs möglich ist. In der Transportstellung ergibt sich der Nachteil, daß bei Kurvenfahrten ein starkes Ausschwenken des Rahmens erfolgt. Weiterhin ist ein relativ aufwendiger Mechanismus erforderlich, um die Räder bezüglich des Rahmens abzusenken oder anzuheben, wobei insbesondere eine gleichmäßige Lageveränderung nur mit hohem Aufwand möglich ist. Weiterhin laufen die Räder in der Arbeitsspur, wodurch es nicht möglich ist, eine weitere Maschine, etwa eine Drillmaschine, der Bodenbearbeitungsmaschine folgen zu lassen.

Eine ähnliche Bodenbearbeitungsmaschine ist aus der DE-A-25 34 596 bekannt. Bei dieser Maschine sind jedoch nicht die Räder, sondern die Bodenbearbeitungswerkzeuge selbst höhenverstellbar ausgebildet. Dies erweist sich im Hinblick auf die Krafteinleitung als nachteilig und erfordert zudem einen relativ komplizierten Aufbau der Maschine.

Bei den Geräten nach dem Stand der Technik kommt weiterhin als nachteilig hinzu, daß durch den Aufbau einer Drillmaschine, eines Einzelkornsägerätes, einer Walze etc. die Gesamtanordnung so lang wird, daß die Räder nicht mehr angebracht werden können.

Bei den bekannten Landmaschinen, insbesondere bei Bodenbearbeitungsgeräten und Drillmaschinen, Einzelkornsägeräten, Walzen etc., erweist es sich als problematisch, daß diese immer größer, schwerer und breiter werden, wobei das Gewicht derart ansteigen kann, daß die Maschinen von der Dreipunkthydraulik eines Schleppers nicht mehr ausgehoben werden können und daß Transportschwierigkeiten mit diesen Geräten entstehen.

Der Erfindung liegt die Aufgabe zugrunde, eine Bodenbearbeitungsmaschine der eingangs genannten Art zu schaffen, welche bei einfachem Aufbau und einfacher und betriebssicherer Bedienbarkeit sowohl einen problemlosen Transport auf einer Straße als auch eine zuverlässige Bodenbearbeitung gewährleistet, bei welcher das Umstellen von der Transport- in die Arbeitsstellung in einfacher und sicherer Weise erfolgen kann, und das Ausheben der Bodenbearbeitungsmaschine mittels Rädern durchzuführen, die auch gleichzeitig als Transporträder in Längsfahrtrichtung benutzt werden können.

Erfindungsgemäß wird die Aufgabe dadurch gelöst, daß die Räder außerhalb der Arbeitsbreite der Bodenbearbeitungsmaschine angeordnet sind, daß das sowohl in der Transport- als auch in der Arbeitsstellung jeweils hinten liegende zweite Rad das Nachlaufrad ist, daß in der Transportstellung das an der hinteren Stirnseite angeordnete und in Arbeitsfahrtrichtung vor dem zweiten Rad liegende dritte Rad abgesenkt ist und die Bodenbearbeitungsmaschine mitträgt, und daß das in Transportstellung vorne liegende Rad vom Boden abhebbar und in der Transportstellung ohne tragende Funktion ist.

Die erfindungsgemäße Bodenbearbeitungsmaschine zeichnet sich durch eine Reihe erheblicher Vorteile aus. Durch die Anordnung der Räder an jeder Schmalseite des Rahmens ist es möglich, die gesamte Bearbeitungsbreite auszunutzen, ohne daß hierbei die Fahrspuren der unbelasteten oder angehobenen Räder den bereits bearbeiteten Boden beeinflussen. Dies erweist sich auch dann als besonders vorteilhaft, wenn zusätzlich noch eine weitere Bearbeitungsmaschine, beispielsweise eine Drillmaschine, angebaut werden soll. Ein weiterer wesentlicher Vorteil liegt darin, daß durch die seitliche Abstützung des Rahmens die Gefahr einer Verkippung beim Ausheben und beim Fahren im Vorgewende in sicherer Weise vermieden wird. Mittels der an dem Rahmen gelagerten Tragarme ist es auf besonders einfache Weise möglich, eine Höhenveränderung des Rahmens bzw. der Räder herbeizuführen, wobei sich dabei insbesondere die einfache und robuste Konstruktionsmöglichkeit vorteilhaft auswirkt, da lediglich ein Tragarm für jedes Rad erforderlich ist, welcher lediglich um eine horizontale Achse verschwenkbar ausgebildet sein muß. Die Störungsanfälligkeit der Bodenbearbeitungsmaschine wird durch diese Ausgestaltung wesentlich verringert, während gleichzeitig die Betriebssicherheit gesteigert wird. Durch den einfachen Aufbau der erfindungsgemäßen Bodenbearbeitungsmaschine ist es auch für ungeübte Bedienungspersonen möglich, ohne oder nach sehr kurzer Einweisungszeit die Bodenbearbeitungsmaschine sicher bedienen zu können.

Da die Räder an den Enden der jeweiligen Tragarme gelagert sind und um die im wesentlichen vertikale Achse schwenkbar ausgebildet sind, ist es möglich, in der Arbeitsstellung mit der erfindungsgemäßen Bodenbearbeitungsmaschine auch sehr enge Kurvenradien zu fahren. Durch die Verwendung der erfindungsgemäßen schwenkbaren Tragarme ist es weiterhin möglich, mit günstigen Kraftverhältnissen eine gezielte und genaue Einstellung der Bodenbearbeitungstiefe vorzunehmen, da ein relativ langer Hebelarm zur Verfügung steht, an dem das jeweilige Rad gelagert ist. Üblicherweise werden die Räder während der Arbeit der Bodenbearbeitungsmaschine angehoben, es ist aber auch möglich, wie beschrieben, die Arbeitstiefe mittels der Räder einzustellen.

Ein weiterer, wesentlicher Vorteil der erfindungsgemäßen Bodenbearbeitungsmaschine besteht darin, daß es möglich ist, an diese eine weitere Bodenbearbeitungsmaschine, beispielsweise eine Sämaschine, zu koppeln, ohne daß der Betrieb dieser zweiten Bodenbearbeitungsmaschine durch die Räder beeinträchtigt wird. Insbesondere ist es möglich, die nachfolgende Bodenbearbeitungsmaschine in einem sehr kurzen Abstand zu der erfindungsgemäßen Bodenbearbeitungsmaschine anzuordnen, wodurch die Manövrierbarkeit erheblich verbessert wird.

Erfindungsgemäß handelt es sich bei den seitlich angebrachten Rädern um zwei, drei oder vier oder auch um mehr Räder, durch welche die Bodenbearbeitungsmaschine einschließlich evtl. aufgebauter weiterer Maschinen, beispielsweise einer Drillmaschine, auf dem Vorgewende ausgehoben werden kann. Dieselben Räder werden für den Transport in Längsrichtung der Bodenbearbeitungsmaschine verwendet, ohne daß sie umgesteckt werden müssen. Als Alternativen können zwei, drei, vier oder mehr Räder verwendet werden, wobei die Bodenbearbeitungsmaschine entweder am Dreipunktgestänge eines Schleppers angebracht oder mittels einer Deichsel angehängt ist.

Es ist wichtig, darauf hinzuweisen, daß die Bodenbearbeitungsmaschine in Verbindung mit einer Drillmaschine oder anderen Geräten, wie einer Einzelkornsämaschine, einer Walze, eingesetzt werden kann. In den Unteransprüchen sind Lösungsmöglichkeiten beschrieben, bei welchen zwei, drei, vier und mehr Räder vorgesehen sind, wobei bei der Verwendung zweier Räder in Längsfahrt der Bodenbearbeitungsmaschine das Kippmoment um die Längsachse von einem Schlepper aufgefangen werden muß.

Das dritte Rad dient zur sicheren Abstützung der Bodenbearbeitungsmaschine, wenn diese von einem Schlepper abgekoppelt ist, um beispielsweise von der Arbeitsstellung in die Transportstellung umgestellt zu werden, sowie als Stützrad in der Transportstellung.

Als besondere günstig erweist es sich, wenn der in Transportfahrtrichtung vordere, erste Tragarm in Form einer Deichsel ausgebildet ist. Es ist bei dieser Ausgestaltung nicht erforderlich, eine zusätzliche, separate Deichsel zu verwenden, so daß die erfindungsgemäße Bodenbearbeitungsmaschine besonders leicht bedienbar ist, da die Bedienungsperson nicht noch zusätzlich auf das Anbringen und/oder Verriegeln einer Deichsel achten muß. Weiterhin erweist sich der Verzicht auf eine Deichsel hinsichtlich des Gesamtgewichts der Maschine als vorteilhaft.

In günstiger Weise sind der erste und der zweite Tragarm in der Arbeitsstellung zur Absenkung des Rahmens nach oben verschwenkbar. Diese Ausgestaltung ist deshalb besonders günstig, weil der oberhalb der Bodenbearbeitungsmaschine vorhandene Raum frei zur Verfügung steht, so daß die Verschwenkung der Tragarme den Betrieb der Bodenbearbeitungsmaschine nicht stört oder beeinflußt.

Weiterhin erweist es sich als günstig, wenn die Achsen der an dem ersten und dem zweiten Tragarm gelagerten ersten und zweiten Räder in der Arbeitsstellung im wesentlichen zueinander fluchten. Hierdurch ist eine besonders gleichmäßige statische Abstützung möglich, weiterhin erweist sich diese Anordnung der Räder im Hinblick auf eine nachgeordnete Maschine, beispielsweise eine Sämaschine, als günstig, da bei einem Anheben und Absenken des Rahmens der Bodenbearbeitungsmaschine auch das Eintauchen der Särohre in den Erdboden bzw. deren Anhebung besonders günstig und gleichmäßig erfolgen kann, ohne daß die Gefahr von Beschädigungen oder Verschmutzungen besteht.

In vorteilhafter Weise ist das dritte Rad in Arbeitsstellung in Arbeitsfahrtrichtung vor dem zweiten Rad angeordnet und so ausgestaltet, daß in Transportstellung die Achsen des zweiten und des dritten Rades im wesentlichen miteinander fluchten. In der Transportstellung ist somit eine gleichmäßige, kippsichere Abstützung möglich, während in der Arbeitsstellung kein zusätzlicher Raumbedarf erforderlich ist und das dritte Rad, welches in der Arbeitsstellung nicht benötigt wird, nicht stört.

In der Transportstellung ist das dritte Rad nichtnachlaufend gelagert, um auf diese Weise ein ausreichendes Fahrverhalten der Bodenbearbeitungsmaschine zu ermöglichen. Daß dabei das zweite Rad nachlaufend ausgebildet ist, erweist sich als günstig, da auch enge Kurvenfahrten auf der Straße in exakter weise erfolgen können. Die Verriegelung des dritten Rades in der Transportstellung erfolgt bevorzugterweise über eine separate Verriegelungsvorrichtung, mittels derer Fehlfunktionen ausgeschlossen sind.

Um zu vermeiden, daß das dritte Rad während des Betriebs der Bodenbearbeitungsmaschine störend mit dem Erdreich in Kontakt kommt, ist erfindungsgemäß vorgesehen, daß die Schwenkachse dieses Rades bezüglich ihres oberen Bereichs in Arbeitsstellung in die Arbeitsfahrtrichtung geneigt ist. Da in bevorzugter Weise der Rahmen der erfindungsgemäßen Bodenbearbeitungsmaschine an Unterlenker eines Dreipunktgestänges eines Schleppers koppelbar ist, ist es ohne Probleme möglich, den dem Schlepper zugeneigten Bereich der Bodenbearbeitungsmaschine bzw. des Rahmens beim Betrieb etwas anzuheben, um auf diese Weise das dritte Rad vom Ackerboden abzuheben. Um diese Maßnahme weiter zu verbessern, kann es vorgesehen sein, daß das dritte Rad um eine, auf die Arbeitsstellung bezogen, horizontal in Arbeitsfahrtrichtung ausgerichtete Achse verschwenkbar ist. Es ist darauf hinzuweisen, daß die Räder beim Betrieb der Bodenbearbeitungsmaschine normalerweise angehoben sind, beim Wenden auf dem Vorgewende jedoch der Abstützung dienen.

Um in der Transportstellung ein sicheres Fahrverhalten zu gewährleisten, ist vorgesehen, daß das erste Rad in der Transportstellung vom Boden abhebbar ist. Dabei kann es weiterhin günstig sein, das erste Rad selbst nichtschwenkbar zu verriegeln, um eine Beeinträchtigung der Deichsel bzw. des Ankoppelbereichs des Schleppers zu vermeiden, Weiterhin kann es günstig sein, an das erste Rad den Schlepper anzukoppeln und dessen Vertikalachse als Schwenkachse für die nachlaufende Bodenbearbeitungsmaschine zu verwenden.

In einer besonders vorteilhaften Weiterbildung der Erfindung ist der erste Tragarm um eine vertikale Achse verschwenkbar, wobei es günstig sein kann, diesen in verschiedenen Schwenkstellungen zu fixieren. Durch diese Maßnahme ist es möglich, den ersten Tragarm in eine der Längsmittelebene angenäherte Position zu verschwenken wenn die Bodenbearbeitungsmaschine sich in der Transportstellung befindet, um eine möglichst mittige deichselartige Anlenkung an einem Schlepper zu ermöglichen.

Erfindungsgemäß ist weiterhin vorgesehen, daß der erste Tragarm in Arbeitsstellung bezüglich der Arbeitsfahrtrichtung nach vorne verschwenkbar ist. Dies kann sich dann als günstig erweisen, wenn mit der Bodenbearbeitungsmaschine ein Feldrand bearbeitet werden soll, bei welchem es nicht möglich ist, daß das erste Rad außerhalb des Feldes abrollt, beispielsweise wenn ein Zaun oder ein Graben im Wege ist. Die Verschwenkung nach vorne ist deshalb günstig, da vor der

Bodenbearbeitungsmaschine wegen des wesentlich schmäleren Schleppers ausreichend Raum zur Verfügung steht.

Weiterhin kann es erfindungsgemäß günstig sein, wenn in der Transportstellung der erste Tragarm entfernbar und gegen eine Deichsel ersetzbar ist. Dabei kann der erste Tragarm entweder ganz oder nur zum Teil entfernbar sein.

Zum einfachen und betriebssicheren Anheben der Tragarme werden erfindungsgemäß bevorzugterweise Hydraulikzylinder verwendet, wobei es möglich ist, mit den Hydraulikzylindern einen Gasdruckspeicher zu verbinden oder mit diesem zuzuschalten, da auf diese Weise die Bedienung wesentlich erleichtert wird. Für den Fahrer kann es schwierig sein, den Schlepperkraftheber und die Hydraulikzylinder zum Anheben der Räder gleichzeitig zu bedienen, Bei der Verwendung eines Druckspeichers ist es möglich, die Hydraulikzylinder zunächst vorzubelasten und dann anschließend das Anheben über die Dreipunktkopplung des Schleppers zu unterstützen. Dabei müßte dann das Einschalten der Hydraulik für die Dreipunktkopplung unmittelbar auf die Betätigung der Hydraulikzylinder einwirken.

Im folgenden wird die Erfindung anhand eines Ausführungsbeispiels in Verbindung mit der Zeichung beschrieben, Dabei zeigt:

Fig. 1 eine Draufsicht auf ein Ausführungsbeispiel einer erfindungsgemäßen Bodenbearbeitungsmaschine in der Transportstellung;

Fig. 2 eine Seitenansicht der Bodenbearbeitungsmaschine in Transportstellung;

Fig. 3 eine Draufsicht auf die Bodenbearbeitungsmaschine in Arbeitsstellung; und

Fig. 4 eine Draufsicht auf ein weiteres Ausführungsbeispiel der erfindungsgemäßen Bodenbearbeitungsmaschine, welche mit einer Sämaschine kombiniert ist, wobei die Bodenbearbeitungsmaschine mit vier Rädern versehen und mittels einer Deichsel gezogen ist.

Bei der Darstellung des Ausführungsbeispiels der erfindungsgemäßen Bodenbearbeitungsmaschine wurde zum Zwecke der klareren Darstellung und der Erleichterung des Verständnisses der Erfindung auf die exakte Abbildung der für die Erfindung nicht wesentlichen Bestandteile der Bodenbearbeitungsmaschine verzichtet.

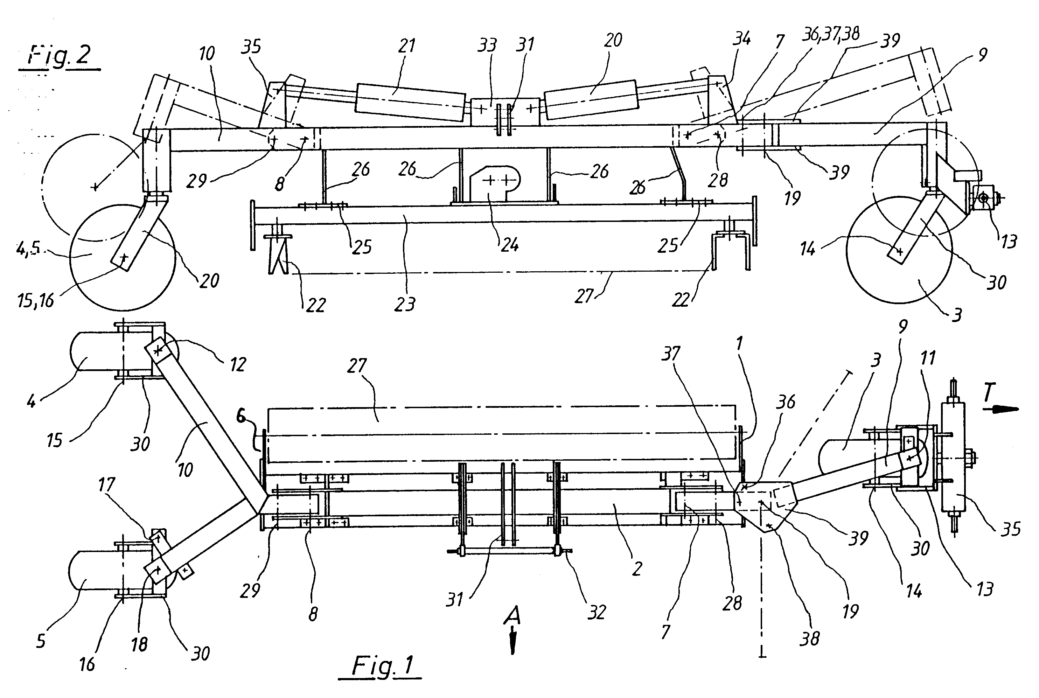

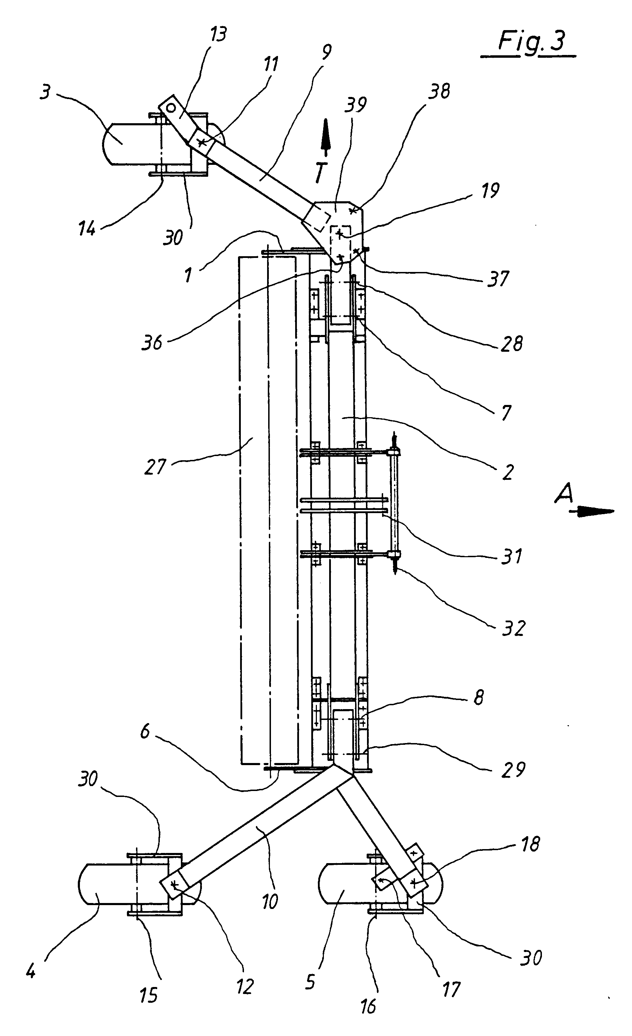

Wie aus den Fig. 1 bis 3 ersichtlich ist, weist die Bodenbearbeitungsmaschine einen länglichen, im wesentlichen kastenförmigen oder in Form eines Hohlprofils ausgebildeten Rahmen 2 auf, an welchem Werkzeuge 22 gelagert sind, welche in Form von um vertikale Achsen drehenden Kreiseleggen ausgebildet sind. Die Werkzeuge 22 sind, wie in Fig. 2 dargestellt, an einem Werkzeugträger 23 gelagert und, bezüglich ihrer Drehachsen, in üblicher Weise in einer Linie ausgerichtet. An dem Werkzeugträger 23 ist ein Getriebe 24 angeordnet, über welches mittels einer nicht dargestellten Zapfwelle eines ebenfalls nicht dargestellten Schleppers die Werkzeuge 22 antreibbar sind. Der Werkzeugträger ist über mehrere Streben 26 und Laschen 25 mit dem Rahmen 2 verbunden. Zum Zwecke einer deutlicheren Darstellung wurden nur jeweils die äußeren Werkzeuge 22 dargestellt, die Umrißlinie 27 zeigt den Raum an, in welchem die restlichen Werkzeuge angeordnet sind. In analoger Weise erfolgt die Darstellung in den Fig. 1 und 3.

An dem Rahmen 2 sind zwei horizontale Schwenkachsen 7, 8 vorgesehen, welche an den seitlichen Endbereichen des Rahmens 2 angeordnet sind und welche zur Lagerung zweier Tragarme 9, 10 dienen, welche um diese horizontalen Achsen 7, 8 verschenkbar sind. Mittels einer beispielsweise in Form eines Steckbolzens ausgeführten Verriegelung 28, 29 sind die Tragarme 9, 10 in der in Fig. 2 mit ausgezogenen Linien dargestellten Transportstellung verriegelbar. Die Tragarme 9, 10 tragen an ihren freien Endbereichen jeweils ein erstes Rad 3 bzw. ein zweites Rad 4, wobei die beiden Räder um vertikale Achsen 11, 12 verschwenkbar sind und in Form eines Nachlaufrades ausgebildet sind, d. h. die Drehachsen 14, 15 der Räder 3 und 4 sind in einem Abstand zu den vertikalen Achsen 11, 12 angeordnet. Im übrigen sind die Räder in üblicher Weise an einer Radgabel 30 gelagert.

Der Tragarm 10 ist in Form eines Doppel-Tragarms ausgebildet und trägt ein drittes Rad 5, welches um eine vertikale Schwenkachse 18 verschwenkbar und ebenfalls in Form eines an einer Radgabel 30 gelagerten Nachlaufrades ausgebildet ist. Die Verschwenkbarkeit des dritten Rades 5 ist mittels einer Verriegelungsvorrichtung 17, welche beispielsweise in Form eines durch eine am Rahmen gelagerte Platte durchsteckbaren Bolzens ausgebildet sein kann, begrenzbar.

Wie aus den Fig. 1 und 3 ersichtlich ist, ist der erste Tragarm 9 an der in Transportfahrtrichtung T vorderen Schmalseite 1 der Bodenbearbeitungsmaschine gelagert, während der zweite Tragarm 10 an der hinteren Schmalseite 6 angeordnet ist.

Zur Ankopplung des Rahmens 2 an einen Schlepper sind im einzelnen nicht weiter dargestellte Anschlußpunkte 31 zur Verbindung mit einem Oberlenker und Anschlußpunkte 32 zur Verbindung mit einem Unterlenker vorgesehen. Die Anschlußpunkte 31, 32 sind jeweil soweit verlängert, daß eine weitere Bodenbearbeitungsmaschine, beispielsweise eine Sämaschine, an den Rahmen 2 anlenkbar ist, wobei dies bezüglich der in den Fig. 1 und 3 gezeigten Draufsicht auf der linken Seite zu erfolgen hätte, während der nicht gezeigte Schlepper an der rechten Seite ankoppelbar wäre.

Zum Zwecke der deutlicheren Darstellung wurde in den Fig. 1 und 3 darauf verzichtet, die in Fig. 2 gezeigten Hydraulikzylinder 20, 21 abzubilden, welche zum einen an einem an dem Rahmen 2 befestigten Lagerbock 33 und zum anderen an Stützen 34, 35 der Tragarme 9 und 10 gelenkig befestigt sind. Durch Betätigung der Hydraulikzylinder 20, 21 ist es möglich, die Tragarme 9, 10 von der in Fig. 2 mit durchgezogenen Linien gezeigten Transportstellung in die mit gestrichelten Linien dargestellte Arbeitsstellung zu verschwenken, in welcher die Werkzeuge 22 abgesenkt und mit dem Erdboden in Eingriff bringbar sind.

Wie in Fig. 1 gezeigt, ist das freie Ende des Tragarms 9 in Form einer Deichsel 13 ausgebildet, welche in Fig. 2 nur schematisch dargestellt ist und beispielsweise in Form einer mit einem Bolzen versehenen Lasche ausgebildet sein kann, welche mittels einer im einzelnen nicht gezeigten Bohrung an eine Ackerschiene 35 eines Schleppers, welche nicht Bestandteil der erfindungsgemäßen Bodenbearbeitungsmaschine ist, ankoppelbar ist.

Der Tragarm 9 ist um eine vertikale Achse 19 (siehe Fig. 1 und 3) verschwenkbar, wobei es möglich ist, die Verschwenkbarkeit in bestimmten Stellungen zu begrenzen, beispielsweise dadurch, daß Ausnehmungen 36, 37, 38 an einer Lagerplatte 39 vorgesehen sind, durch welche ein nicht dargestellter Verriegelungsbolzen durchführbar ist. Bei dem gezeigten Ausführungsbeispiel ist der Tragarm in einen äußeren und in einen rahmenseitigen Teil unterteilt, so daß die vertikale Schwenkachse 19 im mittleren Bereich des Tragarms 9 angeordnet ist, um, wie in Fig. 2 gezeigt, die Verschwenkung mittels des Hydraulikzylinders 20 nicht zu beeinflussen. In Fig. 1 ist der Tragarm 9 in eine mittlere Stellung verschwenkt, bei welcher die Verriegelung mittels der Verriegelungsausnehmung 37 erfolgt. In dieser Stellung ist die Deichsel 13 mittig angeordnet und der Längsmittelachse der Bodenbearbeitungsmaschine angenähert, um ein besonders günstiges Fahrverhalten zu gewährleisten. In Fig. 3 ist ein Stellung dargestellt, bei welcher die Verriegelung mittels der Verriegelungsausnehmung 36 erfolgt, um die Achsen 14 und 15 der Räder 3 und 4 zueinander fluchtend anzuordnen und um die Bodenbearbeitungsmaschine in die Arbeitsstellung zu bringen. Bei einer Verriegelung mittels der Verriegelungsausnehmung 38 ist es möglich, den Tragarm 9 in Arbeitsfahrtrichtung A nach vorne zu verschwenken, um beispielsweise ein dichtes Entlangfahren an einem Zaun oder einem Graben einer Mauer zu ermöglichen.

Im folgenden wird die Funktionsweise der erfindungsgemäßen Bodenbearbeitungsmaschine beschrieben. Bei der in Fig. 3 in der Draufsicht gezeigten Arbeitsstellung ist, wie bereits beschrieben, durch Anheben des Unterlenkers des nicht dargestellten Schleppers das dritte Rad 5 vom Erdboden angehoben, so daß die Bodenbearbeitungsmaschine auf den beiden Räder 3 und 4 abrollt, deren Achsen 14 und 15 zueinander fluchten. Da die Räder 3 bis 5 als Nachlaufräder ausgebildet sind, ist es zur Umstellung in die Transportstellung lediglich erforderlich, die Deichsel 13 an einen Schlepper anzuhängen, so wie dies in Fig. 1 dargestellt ist. Durch einen Zug in Richtung der Transportfahrtrichtung T ändern die Räder 3, 4 und 5 ihre Stellung, so wie dies in Fig. 1 gezeigt ist. Nun ist es möglich, das Rad 5 mittels der Verriegelungsvorrichtung 17 zu verriegeln, wenn das Rad sich noch in der Luft, d. h. im angehobenen Zustand befindet, um dessen Nachlauf zu beseitigen. Weiterhin ist es möglich, durch Anheben der Ackerschiene 35 das erste Rad 3 vom Boden anzuheben, so daß nunmehr die Bodenbearbeitungsmaschine lediglich auf den Räder 4 und 5 abgestützt ist. Um einen mittigen Angriff der Deichsel 13 zu ermöglichen, wird der äußere Bereich des Tragarms 9 bevorzugterweise um die vertikale Achse 19 verschwenkt, wobei hinsichtlich der Lagerplatte 39 die Verriegelung von der Verriegelungsausnehmung 36 zur Verriegelungsausnehmung 37 gewechselt wird.

Bei der Umstellung von der Arbeitsstellung in die Transportstellung und umgekehrt ist es weiterhin erforderlich, die Tragarme 9, 10 relativ zu dem Rahmen 2 abzusenken bzw. anzuheben, was mit Hilfe der Hydraulikzylinder 20, 21 erfolgt. In Fig. 2 ist mit ausgezogenen Linien eine Stellung gezeigt, welcher der Transportstellung entspricht. Dabei sind die Tragarme 9, 10 abgesenkt, so daß die Werkzeuge 22 vom Boden angehoben werden. Bei einem Übergang in die Arbeitsstellung ist es erforderlich, mittels der Hydraulikzylinder 20, 21 die Tragarme und damit die Räder anzuheben. Zugleich mit der Betätigung der Hydraulikzylinder 20, 21 ist es beim Übergang von der Transportstellung in die Arbeitsstellung erforderlich, mittels eines nicht dargestellten, an einem Schlepper vorgesehenen Schlepperkrafthebers, die Bodenbearbeitungsmaschine etwas anzuheben bzw. zu verkippen, um das Rad 5 vom Erdboden abzuheben.

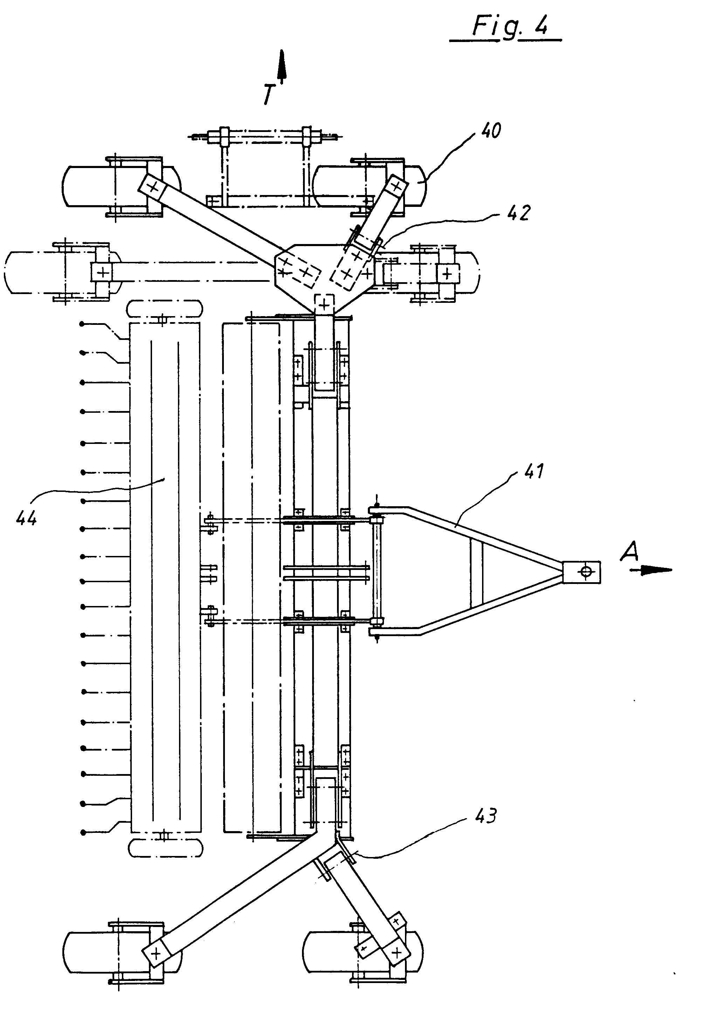

In Fig. 4 ist eine weitere Ausgestaltungsform der erfindungsgemäßen Bodenbearbeitungsmaschine dargestellt, bei welcher ein viertes Rad 40 vorgesehen ist, welches an der Deichsel 9 angebracht ist. Im übrigen entsprechen die sonstigen gezeigten Teile der Bodenbearbeitungsmaschine den im Zusammenhang mit den Fig. 1 bis 3 beschriebenen Teilen, so daß auf eine nochmalige detaillierte Beschreibung verzichtet werden kann. Zur Vereinfachung der Darstellung wurde auch auf die Wiederholung der Bezugszeichen verzichtet. Bei dem in Fig. 4 gezeigten Ausführungsbeispiel ist die Bodenbearbeitungsmaschine mittels einer Deichsel 41 in Arbeitsstellung an einen Schlepper anhängbar. Die Deichsel 41 ist umhängbar ausgebildet. In der Arbeitsstellung muß das Rad 5 (siehe Fig. 3) festgesteckt oder festgestellt sein. Der Vorteil dieser Ausgestaltungsform liegt darin, daß die Bodenbearbeitungsmaschine in der Arbeitsstellung und in der Transportstellung wie ein Anhänger an einem Schlepper geführt werden kann. Dabei ist es möglich, die Räder 43 um die Schwenkachse 19 so an die Bodenbearbeitungsmaschine heranzuschwenken, daß auch bei einer derartigen Fahrweise an Grenzen oder Gräben dicht herangefahren werden kann.

Soll mit zwei Rädern und einer Deichsel gefahren werden, müssen die beiden Räder 5, 40 um ihre Schwenkachsen 42, 43 angehoben und in der Hochlage festgesteckt werden. Es ist dann auch notwendig, die Deichsel nicht nur an den beiden Punkten 32 zu lagern, sondern mit einem dritten Punkt am Oberlenker-Angriffspunkt 31 zu befestigen. Für eine derartige Fahrweise müssen die Räder 3 und 4 so festgesteckt werden, daß sie in Arbeitsrichtung stehen.

Wenn das Gerät in der Arbeits- und Transportstellung an den Dreipunktlenkern des Schleppers befestigt werden soll, ist eine weitere, vorteilhafte Lösung dadurch gegeben, daß der Schlepper mit einer Schnellkupplung ausgerüstet ist, so daß die Bodenbearbeitungsmaschine in beiden Lagen relativ einfach gefangen und befestigt werden kann.

**Patentansprüche**

1. Bodenbearbeitungsmaschine größerer Arbeitsbreite, die zum Transport an einer Schmalseite (1) und zur Bodenbearbeitung an ihrer Breitseite mit einem Schlepper verbindbar oder an diesen anbaubar ist, wobei die Bodenbearbeitungsmaschine oder ein Werkzeuge (22) tragender Rahmen (2) der Bodenbearbeitungsmaschine auf mehreren Rädern (3, 4, 5) lagerbar ist und die Räder (3, 4, 5) relativ zum Rahmen (2) oder der Bodenbearbeitungsmaschine höhenverstellbar sind, und wobei ferner zwei dieser Räder (3, 4, 5) für den Transport der Bodenbearbeitungsmaschine in Längsrichtung verwendbar und zumindest eines der Räder (3, 4) um eine im wesentlichen vertikale Achse (11, 12) schwenkbar angeordnet ist, dadurch gekennzeichnet, daß die Räder (3, 4, 5) außerhalb der Arbeitsbreite der Bodenbearbeitungsmaschine angeordnet sind, daß das sowohl in der Transport- als auch in der Arbeitsstellung jeweils hinten liegende zweite Rad (4) das Nachlaufrad ist, daß in der Transportstellung das an der hinteren Stirnseite (6) angeordnete und in Arbeitsfahrtrichtung (A) vor dem zweiten Rad (4) liegende dritte Rad (5) abgesenkt ist und die Bodenbearbeitungsmaschine mitträgt, und daß das in Transportfahrtrichtung (T) vorne liegende Rad vom Boden abhebbar und in der Transportstellung ohne tragende Funktion ist.

2. Bodenbearbeitungsmaschine nach Anspruch 1, dadurch gekennzeichnet, daß an jeder Schmalseite (1, 6) ein um eine horizontale Achse (7, 8) schwenkbarer, sich zumindest zum Teil längs der Längsmittelebene der Bodenbearbeitungsmaschine erstreckender Tragarm (9, 10) am Rahmen (2) oder an der Bodenbearbeitungsmaschine gelagert ist, an dessem freien Ende die Räder (3, 4) angeordnet sind.

3. Bodenbearbeitungsmaschine nach Anspruch 1 oder 2, dadurch gekennzeichnet, daß an der in Transportfahrtrichtung (T) hinteren Stirnseite (6) an dem Tragarm (10) das dritte Rad (5) angeordnet ist.

4. Bodenbearbeitungsmaschine nach einem der Ansprüche 1 oder 2, dadurch gekennzeichnet, daß an der in der Transportfahrtrichtung (T) vorderen Seite der Bodenbearbeitungsmaschine ein viertes Rad (40) angebracht ist.

5. Bodenbearbeitungsmaschine nach Anspruch 1 bis 4, dadurch gekennzeichnet, daß der in Transportfahrtrichtung (T) vordere, erste Tragarm (9) in Form einer Deichsel (13) ausgebildet ist.

6. Bodenbearbeitungsmaschine nach einem der Ansprüche 1 bis 5, dadurch gekennzeichnet, daß der erste (9) und der zweite (10) Tragarm in der Arbeitsstellung zur Absenkung des Rahmens (2) oder der Bodenbearbeitungsmaschine nach oben verschwenkbar sind.

7. Bodenbearbeitungsmaschine nach einem der Ansprüche 1 bis 6, dadurch gekennzeichnet, daß die Achsen (14, 15) der an dem ersten (9) und den zweiten (10) Tragarm gelagerten ersten (3) und zweiten (4) Räder in der Arbeitsstellung im wesentlichen zueinander fluchten.

8. Bodenbearbeitungsmaschine nach einem der Ansprüche 2 bis 7, dadurch gekennzeichnet, daß in Transportstellung die Achsen (15, 16) des zweiten (4) und dritten (5) Rades im wesentlichen miteinander fluchten.

9. Bodenbearbeitungsmaschine nach einem der Ansprüche 2 bis 8, dadurch gekennzeichnet, daß das dritte Rad (5) in Transportstellung nicht-nachlaufend gelagert ist.

10. Bodenbearbeitungsmaschine nach Anspruch 9, dadurch gekennzeichnet, daß eine Verriegelungsvorrichtung (17) zur Verhinderung einer Verschwenkung des dritten Rades (5) in der Transportstellung vorgesehen ist.

11. Bodenbearbeitungsmaschine nach einem der Ansprüche 2 bis 10, dadurch gekennzeichnet, daß die Schwenkachse (18) des dritten Rades (5) oder des vierten Rades (40) bezüglich ihres oberen Bereichs in Arbeitsstellung in die Arbeitsfahrtrichtung (A) geneigt ist.

12. Bodenbearbeitungsmaschine nach einem der Ansprüche 2 bis 11, dadurch gekennzeichnet, daß das dritte Rad (5) oder das vierte Rad (40) unabhängig von den anderen Rädern hochgestellt werden können und um eine am Tragarm (9 oder 10) befindliche Achse (42, 43) verschwenkbar sind.

13. Bodenbearbeitungsmaschine nach einem der Ansprüche 1 bis 12. dadurch gekennzeichnet, daß der erste Tragarm (9) um eine vertikale Achse (19) schwenkbar ist.

14. Bodenbearbeitungsmaschine nach Anspruch 13, dadurch gekennzeichnet, daß der erste Tragarm (9) in verschiedenen Schwenkstellungen fixierbar ist.

15. Bodenbearbeitungsmaschine nach einem der Ansprüche 13 oder 14, dadurch gekennzeichnet, daß der erste Tragarm (9) in Arbeitsstellung bezüglich der Arbeitsfahrtrichtung (A) nach vorne verschwenkbar ist.

16. Bodenbearbeitungsmaschine nach einem der Ansprüche 1 bis 15, dadurch gekennzeichnet, daß der Rahmen (2) an Unterlenker eines Dreipunktgestänges eines Schleppers koppelbar ist.

17. Bodenbearbeitungsmaschine nach einem der Ansprüche 1 bis 16, dadurch gekennzeichnet, daß in der Transportstellung der erste Tragarm (9) entfernbar und gegen eine Deichsel ersetzbar ist.

18. Bodenbearbeitungsmaschine nach einem der Ansprüche 1 bis 17, dadurch gekennzeichnet, daß die Bodenbearbeitungsmaschine in Form einer Kreiselegge ausgebildet ist.

19. Bodenbearbeitungsmaschine nach einem der Ansprüche 1 bis 18, dadurch gekennzeichnet, daß an die Bodenbearbeitungsmaschine in Arbeitsstellung eine Sämaschine ankoppelbar oder aufgebaut ist.

20. Bodenbearbeitungsmaschine nach Anspruch 19, dadurch gekennzeichnet, daß in Arbeitsstellung die Achsen des ersten (3) und des zweiten (4) Rades bezüglich der Fahrtrichtung neben den Säscharen angeordnet sind.

21. Bodenbearbeitungsmaschine nach einem der Ansprüche 1 bis 20, dadurch gekennzeichnet, daß der erste (9) und der zweite (10) Tragarm mittels Hydraulikzylindern (20, 21) verschwenkbar sind.

22. Bodenbearbeitungsmaschine nach Anspruch 21, dadurch gekennzeichnet, daß zumindest ein Gasdruckspeicher mit zumindest einem der Hydraulikzylinder (20, 21) betriebsverbunden ist.

23. Bodenbearbeitungsmaschine nach einem der Ansprüche 1 bis 22, dadurch gekennzeichnet, daß der Schwenkbereich der Schwenkarme (9, 10) von Endanschlägen begrenzt wird.

24. Bodenbearbeitungsmaschine nach einem der Ansprüche 1 bis 23, dadurch gekennzeichnet, daß die Tragarme (9, 10) in der Aushublage feststeckbar sind.

25. Bodenbearbeitungsmaschine nach einem der Ansprüche 1 bis 24, dadurch gekennzeichnet, daß eine Schnellkuppelvorrichtung für die Verbindung zwischen einem Schlepper und der Bodenbearbeitungsmaschine in der Arbeitsstellung und/oder in der Transportstellung vorgesehen ist.

26. Bodenbearbeitungsmaschine nach einem der Ansprüche 1 bis 25, dadurch gekennzeichnet, daß zum Anbringen einer Drillmaschine etc. an die Bodenbearbeitungsmaschine eine Hubvorrichtung vorgesehen ist, welche die Drillmaschine oder das Saatgerät näher an die Bodenbearbeitungsmaschine heranführt, wenn die Drillmaschine oder das Saatgerät außer Funktion ist.

**Claims**

1. An agricultural machine of large working width, a narrow side (1) of which agricultural machine is connectible to, or mountable on, a tractor for the purpose of transportation, and the wide side of which is connectible to, or mountable on, the tractor for the purpose of cultivating the soil, wherein the agricultural machine, or a frame (2) of the agricultural machine carrying tools (22) is mountable on a plurality of wheels (3, 4, 5), the wheels (3, 4, 5) being vertically adjustable relative to the frame (2) or to the agricultural machine, and, furthermore, two of these wheels (3, 4, 5) being usable for transporting the agricultural machine in a longitudinal direction, and at least one of the wheels (3, 4) being disposed so as to be pivotable about a substantially vertical axis (11, 12), characterised in that the wheels (3, 4, 5) are disposed outside the working width of the agricultural machine, that the second wheel (4) in each case located at the rear in the transportation position and in the working position is the trailing wheel, that the third wheel (5) disposed at the rear end (b) and in front of the second wheel (4) in the working direction of travel (A) is lowered when in the transportation position and carries along the agricultural machine, and that the wheel located at the front in the transportation direction of travel (T) is raisable from the ground and does not have a carrying function when in the transportation position.

2. An agricultural machine as claimed in claim 1, characterised in that a support arm (9, 10) pivotable about a horizontal axis (7, 8 ) and extending at least partially along the longitudinal centre plane of the agricultural machine, is mounted on the frame (2) or on the agricultural machine at each narrow side (1, 6), the wheels (3, 4) being disposed at the free ends of said support arms.

3. An agricultural machine as claimed in claim 1 or 2, characterised in that the third wheel (5) is disposed on the support arm (10) at the rear end (6) in the transportation direction of travel (T).

4. An agricultural machine as claimed in one of the claims 1 or 2, characterised in that a fourth wheel (40) is mounted on the front end of the agricultural machine in the transportation direction of travel (T).

5. An agricultural machine as claimed in claims 1 to 4, characterised in that the first support arm (9) at the front in the transportation direction of travel (T) is in the form of a thill (13).

6. An agricultural machine as claimed in one of the claims 1 to 5, characterised in that, when in the working position, the first (9) and the second (10) carrier arm are pivotable upwardly for the purpose of lowering the frame (2) or the agricultural machine.

7. An agricultural machine as claimed in one of the claims 1 to 6, characterised in that the axles (14, 15) of the first (3) and second (4) wheels mounted on the first (9) and on the second (10) carrier arm are substantially in alignment with one another when in the working position.

8. An agricultural machine as claimed in one of the claims 2 to 7, characterised in that, when in the transportation position, the axles (15, 16) of the second (4) and third (5) wheel are substantially in alignment with one another.

9. An agricultural machine as claimed in one of the claims 2 to 8, characterised in that the third wheel (5) is mounted so as to be non-trailing when in the transportation position.

10. An agricultural machine as claimed in claim 9, characterised in that a locking device (17) is provided for preventing pivoting of the third wheel (5) when in the transportation position.

11. An agricultural machine as claimed in one of the claims 2 to 10, characterised in that the pivot axis (18) of the third wheel (5) or of the fourth wheel (40) is inclined in the working direction of travel (A) relative to its upper region in the working position.

12. An agricultural machine as claimed in one of the claims 2 to 11, characterised in that the third wheel (5) or the fourth wheel (40) may be raised independently of the other wheels and are pivotable about an axis (42, 43) located on the support arm (9 or 10).

13. An agricultural machine as claimed in one of the claims 1 to 12, characterised in that the first support arm (9) is pivotable about a vertical axis (19).

14. An agricultural machine as claimed in claim 13, characterised in that the first support arm (9) is fixable in various pivoted positions.

15. An agricultural machine as claimed in one of the claims 13 or 14, characterised in that the first support arm (9) when in the working position is pivotable forwardly with respect to the working direction of travel (A).

16. An agricultural machine as claimed in one of the claims 1 to 15, characterised in that the frame (2) is couplable to lower guide rods of a three-point linkage of a tractor.

17. An agricultural machine as claimed in one of the claims 1 to 16, characterised in that, when in the transportation position, the first support arm (9) is removable and replaceable by a thill.

18. An agricultural machine as claimed in one of the claims 1 to 17, characterised in that the agricultural machine is in the form of a rotary harrow.

19. An agricultural machine as claimed in one of the claims 1 to 18, characterised in that a sowing machine is couplable to or mountable on the agricultural machine when in the working position.

20. An agricultural machine as claimed in claim 19, characterised in that, when in the working position, the axles of the first (3) and of the second (4) wheel are disposed adjacent to the sowing blades with respect to the direction of travel.

21. An agricultural machine as claimed in one of the claims 1 to 20, characterised in that the first (9) and the second (10) carrier arm are pivotable by means of hydraulic cylinders (20, 21).

22. An agricultural machine as claimed in claim 21, characterised in that at least one gas pressure reservoir is operationally connected to at least one of the hydraulic cylinders (20, 21).

23. An agricultural machine as claimed in one of the claims 1 to 22, characterised in that the pivotal range of the pivot arms (9, 10) is limited by end stops.

24. An agricultural machine as claimed in one of the claims 1 to 23, characterised in that the support arms (9, 10) are fixable in the extended position.

25. An agricultural machine as claimed in one of the claims 1 to 24, characterised in that a quick-action coupling device is provided for the connection between a tractor and the agricultural machine when in the working position and/or in the transportation position.

26. An agricultural machine as claimed in one of the claims 1 to 25, characterised in that, for the purpose of mounting a drill machine etc. to the agricultural machine, a lifting device is provided which brings the drill machine or the seed implement nearer to the agricultural machine when the drill machine or the seed implement is out of operation.

**Revendications**

1. Machine pour travailler le sol possédant une largeur de travail assez importante et qui peut être raccordée à un tracteur ou être montée sur ce dernier, sur un petit côté (1) pour son transport et sur son grand côté pour le travail du sol, la machine de travail du sol, ou un cadre (2) de cette dernière, portant des outils (22) pouvant être supportée par plusieurs roues (3, 4, 5), et ces roues (3, 4, 5) pouvant être réglées en hauteur par rapport au cadre (2) ou à la machine de travail du sol, et dans laquelle en outre deux de ces roues (3, 4,5) peuvent être utilisées pour le transport de la machine de travail du sol dans la direction longitudinale et au moins l'une des roues (3, 4) est disposée de manière à pouvoir pivoter autour d'un axe sensiblement vertical (11, 12),

caractérisée en ce que les roues (3, 4, 5) sont disposées à l'extérieur de la largeur de travail de la machine de travail du sol, que la seconde roue (4), qui est disposée respectivement en arrière aussi bien dans la position de transport que dans la position de travail, est la roue traînée, en ce que, dans la position de transport, la troisième roue (5), disposée sur le côté frontal arrière (6) est située devant la seconde roue (4) dans la direction de déplacement de travail (A), est abaissée et supporte conjointement la machine de travail du sol,

et en ce que la roue située en avant dans la direction de transport (T) peut être soulevée du sol et n'a aucune fonction de support dans la position de transport.

2. Machine de travail du sol selon la revendication 1, caractérisée en ce que, sur chaque petit côté (1, 6), un bras de support (9, 10), qui peut basculer autour d'un axe horizontal (7, 8) et s'étend au moins en partie dans le plan médian longitudinal de la machine de travail du sol, et sur les extrémités libres duquel sont montées les roues (3, 4), est tourillonné sur le cadre (2) ou sur la machine de travail du sol.

3. Machine de travail du sol selon la revendication 1 ou 2, caractérisée en ce que la troisième roue (5) est disposée sur le bras de support (10), qui est situé sur la face frontale (6), qui est disposée en arrière dans la direction de transport (A).

4. Machine de travail du sol selon l'une des revendications 1 ou 2, caractérisée en ce qu'une quatrième roue (40) est installée sur la face qui est à l'avant, dans la direction de transport (A), de la machine de travail du sol.

5. Machine de travail du sol selon la revendication 1 à 4, caractérisée en ce que le premier bras de support (9), qui est disposé en avant dans la direction de transport (T), est agencé sous la forme d'un timon (13).

6. Machine de travail du sol selon l'une des revendications 1 à 5, caractérisée en ce que, dans la position de travail, le premier bras de support (9) et le second bras de support (10) peuvent basculer vers le haut de manière à permettre l'abaissement du cadre (2) ou bien de la machine de travail du sol.

7. Machine de travail du sol selon l'une des revendications 1 à 6, caractérisée en ce que, dans la position de travail, les axes (14, 15) de la première roue (3) et de la seconde roue (4), qui sont tourillonnées sur le premier bras de support (9) et sur le second bras de support (10), sont sensiblement alignées entre elles.

8. Machine de travail du sol selon l'une des revendications 2 à 7, caractérisée en ce que, dans la position de transport, les axes (15, 16) de la seconde roue (4) et de la troisième roue (5) sont sensiblement alignés entre eux.

9. Machine de travail du sol selon l'une des revendications 2 à 8, caractérisée en ce que, dans la position de transport, la troisième roue (5) est portée de manière à ne pas être traînée.

10. Machine de travail du sol selon la revendication 9, caractérisée en ce qu'il est prévu un dispositif de verrouillage (17) servant à empêcher, dans la position de transport, une oscillation de la troisième roue (5).

11. Machine de travail du sol selon l'une des revendications 2 à 10, caractérisée en ce que dans la position de travail, l'axe de pivotement (18) de la troisième roue (5) ou de la quatrième roue (40) est incliné, en considérant sa partie supérieure, dans la direction de déplacement de travail (A).

12. Machine de travail du sol selon l'une des revendications 2 à 11, caractérisée en ce que la troisième roue (5) ou la quatrième roue (40) peut être relevée indépendamment des autres roues et peut basculer autour d'un axe (42, 43) situé sur le bras de support (9 ou 10).

13. Machine de travail du sol selon l'une des revendications 1 à 12, caractérisée en ce que le premier bras de support (9) peut pivoter autour d'un axe vertical (19).

14. Machine de travail du sol selon la revendication 13, caractérisée en ce que le premier bras de support (9) peut être fixé dans différentes positions angulaires.

15. Machine de travail du sol selon l'une des revendications 13 et 14, caractérisée en ce que, dans la position de travail, le premier bras de support (9) peut pivoter vers l'avant par rapport à la direction de déplacement de travail (A).

16. Machine de travail du sol selon l'une des revendications 1 à 15, caractérisée en ce que le cadre (2) peut être accouplé au levier articulé inférieur d'un attelage en trois points d'un tracteur.

17. Machine de travail du sol selon l'une des revendications 1 à 16, caractérisée en ce que, dans la position de transport, le premier bras de support (9) peut être retiré et remplacé par un timon.

18. Machine de travail du sol selon l'une des revendications 1 à 17, caractérisée en ce que la machine de travail du sol est agencée sous la forme d'une herse rotative.

19. Machine de travail du sol selon l'une des revendications 1 à 18, caractérisée en ce que , dans la position de travail, un semoir peut être accouplé à la machine de travail du sol ou monté sur elle.

20. Machine de travail du sol selon la revendication 19, caractérisée en ce que, dans la position de travail, les axes de la première roue (3) et de la seconde roue (4) sont disposés, par rapport à la direction de déplacement, à côté des socs de semoir.

21. Machine de travail du sol selon l'une des revendications 1 à 20, caractérisée en ce que le premier bras de support (9) et le second bras de support (10) peuvent pivoter sous l'action de vérins hydrauliques (20, 21).

22. Machine de travail du sol selon la revendication 21, caractérisée en ce qu'au moins un accumulateur à gaz comprimé est raccordé fonctionnellement à au moins l'un des vérins hydrauliques (20, 21).

23. Machine de travail du sol selon l'une des revendications 1 à 22, caractérisée en ce que la zone de pivotement des bras pivotants (9, 10) est limitée par des butées d'extrémités.

24. Machine de travail du sol selon l'une des revendications 1 à 23, caractérisée en ce que les bras de support (9, 10) peuvent être bloqués par enfichage dans la position relevée.

25. Machine de travail du sol selon l'une des revendications 1 à 24, caractérisée en ce qu'il est prévu un dispositif de couplage rapide pour établir la liaison entre un tracteur et la machine de travail du sol, dans la position de travail et/ou dans la position de transport.

26. Machine de travail du sol selon l'une des revendications 1 à 25, caractérisée en ce que pour le montage d'un semoir, etc. sur la machine de travail du sol, il est prévu un dispositif de levage qui rapproche le semoir ou la machine à semer, de la machine de travail du sol lorsque le semoir ou la machine à semer n'est pas en fonctionnement.

Fig.1

Fig.2

_Fig. 3_

_Fig. 4_